(19) **Europäisches Patentamt**
**European Patent Office**
**Office européen des brevets**

(11) **EP 4 502 886 A1**

(12) **EUROPEAN PATENT APPLICATION**

(43) Date of publication:
**05.02.2025 Bulletin 2025/06**

(21) Application number: **23189503.8**

(22) Date of filing: **03.08.2023**

(51) International Patent Classification (IPC):
**G06N 20/10** (2019.01)     **H02J 4/00** (2006.01)

(52) Cooperative Patent Classification (CPC):
**G06N 20/10; G06N 20/00; H02J 4/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **ABB SCHWEIZ AG**
**5400 Baden (CH)**

(72) Inventors:
• **LAURICELLA, Marco**
**68199 Mannheim (DE)**
• **BISKOPING, Matthias**
**69493 Hirschberg (DE)**

(74) Representative: **Maiwald GmbH**
**Engineering**
**Elisenhof**
**Elisenstrasse 3**
**80335 München (DE)**

(54) **IMPROVING THE MONITORING AND/OR PREDICTION OF UNCERTAIN QUANTITIES IN INDUSTRIAL PROCESSES AND ELECTRICAL NETWORKS**

(57)    A computer-implemented method (100) for refining the risk $\alpha$ that an uncertain quantity $x$ in an industrial process (1a) and/or electrical network (1b) will exceed a given threshold value $\tilde{x}$, the method comprising the steps of:
• providing (110) an initial desired value $\alpha^*$ of the risk $\alpha$;
• providing (120) a prediction model (2) that is configured to predict, from values $x_t, x_{t-1}, ..., x_{t-k}$ of the quantity $x$, future values $x_{t+1}, ..., x_{t+l}$ of this quantity $x$;
• providing (130) a history $x^{\#}$ of measured past values $x_t, x_{t-1}, ..., x_{t-k}$ of the quantity $x$;
• determining (140), for this history $x^{\#}$, differences between values $\hat{x}_t, \hat{x}_{t-1}, ..., \hat{x}_{t-k}$ predicted by the prediction model and the measured past values $x_t, x_{t-1}..., x_{t-k}$ as residuals (3);
• determining (150) an estimated probability density function (4) of these residuals (3);
• determining (160), based at least in part on the history $x^{\#}$, and/or on the residuals (3), a confidence set $\mathcal{D}$ to which the estimated probability density function (4) belongs, said confidence set $\mathcal{D}$ comprising probability density functions that would be equally plausible given the history $x^{\#}$ and/or the residuals (3); and
• determining (170), based at least in part on the dimension of the confidence set $\mathcal{D}$, a new risk $\alpha'$ such that, if the risk $\alpha$ that $x$ exceeds $\tilde{x}$ is less than $\alpha'$, it is guaranteed that this risk $\alpha$ will not exceed the initial desired value $\alpha^*$ even if the residuals should behave according to any one of the probability density functions in the confidence set $D$ instead of the estimated probability density function (4).

Fig. 1b

Fig. 1a

EP 4 502 886 A1

**Description**

FIELD OF THE INVENTION

The invention relates to the monitoring and/or prediction of uncertain quantities in industrial processes and electrical networks. Knowledge of these uncertain quantities, at least as accurately as possible, is needed for safe and reliable operation of the industrial process and/or electrical network.

BACKGROUND

When monitoring and/or controlling an industrial process, the development of certain quantities may be uncertain. For example, temperatures, pressures, electrical loads and/or generating powers may fluctuate.

Many such tasks are performed under constraints of the kind that a particular quantity $x$ shall not exceed a given threshold value $\tilde{x}$, while at the same time this quantity $x$ is uncertain to some degree. In such a case, it is mostly not feasible to guarantee that the quantity $x$ will never exceed the threshold value $\tilde{x}$. But a risk $\alpha$ that this happens may still be quantified. If the quantity x is an uncertain quantity, the constraint may therefore be formulated as a chance constraint that the probability (confidence) that the uncertain quantity $x$ will remain below the threshold value $\tilde{x}$ is at least $(1 - \alpha)$.

There are stochastic methods for estimating the risk $\alpha$. Such stochastic methods may avail themselves of a history of past data and use indications that are evident from this history as such without relying on any prior knowledge. They start from the worst-case situation where there is zero knowledge about the behavior of the uncertain quantity $x$. However, in most cases, the situation is a lot less dire, in that at least some knowledge is available.

OBJECTIVE OF THE INVENTION

It is therefore an objective of the present invention to improve the prediction of the risk $\alpha$ that an uncertain quantity $x$ in an industrial process and/or electrical network will exceed a given threshold value $\tilde{x}$ in a situation where there is nonzero knowledge about the behavior of this uncertain quantity $x$ available.

This objective is achieved by a computer-implemented method according to the independent claim. Further advantageous embodiments are detailed in the dependent claims.

DISCLOSURE OF THE INVENTION

The invention provides a computer-implemented method for refining the risk $\alpha$ that an uncertain quantity $x$ in an industrial process and/or electrical network will exceed a given threshold value $\tilde{x}$.

The quantity $x$ may be uncertain for any reason. For example, the quantity $x$ may behave in a technical process in a manner such that it fluctuates or it is not fully predictable. In another example, the quantity $x$ may only be measurable with a large margin of error, and/or only indirectly based on other measurable quantities, so that any prediction of future values that is based on a history of past values has a rather large margin of error. Examples of uncertain quantities $x$ in technical applications include fill levels, pressures, temperatures, electrical loads, and amounts of generated electrical power. For example, in an electricity grid, the behavior of consumers, as well as the power generated from renewable sources, are only predictable to a limited extent.

In the course of this method, an initial desired value $\alpha^*$ of the risk $\alpha$ is provided. Furthermore, a prediction model for the uncertain quantity $x$ is provided. This prediction model is configured to predict, from values $x_t, x_{t-1}, ..., x_{t-k}$ of the quantity $x$, future values $x_{t+1}, ..., x_{t+l}$ of this quantity $x$. This prediction model may take any form. For example, it may be a parametrized function in the past values $x_t, x_{t-1}, ..., x_{t-k}$, and the parameters of this function may have been obtained by fitting. In another example, the prediction model may be a stochastic model, where the past values $x_t, x_{t-1}, ..., x_{t-k}$ decide over distributions from which new samples are then drawn. If there is only very little knowledge available, the prediction model may also, for example, be a simple periodic function or even a constant function. Every drop of knowledge that can be put to use is better than using zero knowledge.

A history $x^{\#}$ of measured past values $x_t, x_{t-1}, ..., x_{t-k}$ of the quantity $x$ is provided. For this history $x^{\#}$, differences between values $\hat{x}_t, \hat{x}_{t-1}, ..., \hat{x}_{t-k}$ predicted by the prediction model and the measured past values $x_t, x_{t-1}, ..., x_{t-k}$ are determined as residuals. Herein, the prediction model may work with any suitable prediction horizon. For example, the prediction model may deliver predicted values $\hat{x}_t, \hat{x}_{t-1}, ..., \hat{x}_{t-k}$ one by one, or in stretches of multiple values.

An estimated probability density function of the residuals is determined. That is, the work product delivered by the prediction model is used as it is, and the estimated probability density function solely concentrates on the work that is left to do regarding a complete and accurate reproduction of the past values $x_t, x_{t-1}, ..., x_{t-k}$ in the history $x^{\#}$.

Based at least in part on the history $x^{\#}$, and/or on the residuals, a confidence set $\mathcal{D}$ to which the estimated probability density function belongs is determined. This confidence set $\mathcal{D}$ comprises probability density functions that would be equally plausible given the history $x^{\#}$ and/or the residuals. In this manner, it is taken into account that the history $x^{\#}$ on which the estimation of the probability density function is based is finite: For an infinitely long history, as per the law of large numbers, the probability density function would converge against the true distribution of the past values $x_t, x_{t-1}, ..., x_{t-k}$. The finiteness of the history means that when estimating a probability density function, some error has to be made. Given an estimated probability density function, the meaning of the confidence set $\mathcal{D}$ is basically: "Given that this probability density function is apparently deemed to be plausible by virtue of the estimate, then the probability density function might just as well be any one of the other functions in the set $\mathcal{D}$."

Based at least in part on the dimension of the confidence set $\mathcal{D}$, a new risk $\alpha'$ is determined. The meaning of this new risk $\alpha'$ is: If the risk $\alpha$ that x exceeds $\tilde{x}$ is less than $\alpha'$, it is guranteed that this risk $\alpha$ will not exceed the initial desired value $\alpha^*$ even if the residuals should behave according to any one of the probability density functions in the confidence set $\mathcal{D}$ instead of the estimated probability density function. Herein, the dimension may, for example, be understood as a number of degrees of freedom that span the set $\mathcal{D}$, or a number of independent variables that need to be provided in order to characterize a member of this set $\mathcal{D}$.

The inventors have found that in this manner, the risk $\alpha$ can be adapted to the part of the uncertainty that is still left in the values $x_t, x_{t-1}, ..., x_{t-k}$ of the quantity x after the prediction model has done its work, and therefore also to the amount of knowledge about the behavior of the uncertain quantity x that is available. The more knowledge is available, the better the accuracy of the prediction model is, which in turn means that the residuals are small and behave according to an easy-to-capture distribution whose members may be characterized by few independent variables (meaning that the set $\mathcal{D}$ has a small dimension). Another factor that contributes to the dimension of the confidence set $\mathcal{D}$ is the size of the history $x^{\#}$ that is available. As discussed before, even given zero prior knowledge, the distribution of the residuals may still be perfectly estimated if an infinitely long history $x^{\#}$ of measured past values $x_t, x_{t-1}, ..., x_{t-k}$ is available. This means that a longer history $x^{\#}$ may at least partially make up for a lack of prior knowledge about the behavior of the uncertain quantity x.

The new risk $\alpha'$ is typically lower than the initial desired value $\alpha^*$. Its meaning can be understood as follows: Under the assumption that the residuals behave according to the estimated probability distribution function, the providing of the initial desired value $\alpha^*$ means that in reality, there will be exactly this risk. But the uncertainty of the estimated probability distribution function, which is reflected in the dimension of the confidence set $\mathcal{D}$, means that the risk may in fact be higher than the initial desired value $\alpha^*$ in case the true distribution of the residuals is not according to the estimated probability density function, but rather according to another probability density function from the confidence set $\mathcal{D}$. To make up for this and guarantee that the risk $\alpha$ will be at most $\alpha^*$, only the new risk $\alpha'$ is acceptable from the start. That is, the uncertainty of the estimated probability distribution function translates to an additional safety margin that must be observed when running the industrial process and/or electrical network. The better the prediction model and the richer the history $x^{\#}$ of measured past values $x_t, x_{t-1}, ..., x_{t-k}$, the smaller this additional safety margin is.

Thus, the end result is that chance constraints that specify a threshold value $\tilde{x}$ for at least one uncertain quantity x and also a desired value $\alpha^*$ of the risk $\alpha$ that the constraint is violated can be met more reliably. This helps a great deal to plan countermeasures for cases where the chance constraint is violated.

For example, in an electrical network, there may be a certain risk $\alpha$ that the supply of electricity strays too far from the demand for the network to run at stable AC frequency, and action has to be taken to bring the two closer together again, e.g., by shedding loads or buying a deficit of energy from a neighbouring network, or by storing excess energy or giving it away to a neighbouring network with money added on top. The latter phenomenon manifests itself in negative prices that occur even in day-ahead auctions of electricity. Such countermeasures cost money, and some cost more money than others. For example, if there is sufficient pump storage for excess electricity available at a particular time, the excess electricity can be stored in there instead of being given away at a negative price. This means that, rather than paying money to get rid of this electricity, the same electricity can be sold later for a profit. This also means that the connections to neighbouring networks, which frequently have a limited power capacity, are not taxed.

In a further particularly advantageous embodiment, the cumulative density function of the estimated probability density function is computed. Then, an inverse of this cumulative density function is computed. From this the inverse of the cumulative density function and the new risk $\alpha'$, a minimum requirement $\tilde{x}^*$ that the threshold value $\tilde{x}$ must fulfil for the guarantee regarding the risk $\alpha$ to be valid is evaluated. In this manner, the new risk $\alpha'$ directly translates into a safety margin in terms of the residual of the uncertain quantity x. That is, in all chance constraints where the uncertain quantity x appears, this can be directly replaced by the newly computed minimum requirement $\tilde{x}^*$ as the residual. For example, the uncertain quantity x may be replaced by the output of the prediction model plus the minimum requirement $\tilde{x}^*$ as the residual.

In a simple example, where it needs to be guaranteed that the fill level of a vessel does not drop below 1 meter with a probability of 80 % (corresponding to a risk of 20 % for this happening), the combination of the quality of the prediction model and the availability of history $x^{\#}$ of measured past values $x_t, x_{t-1}, ..., x_{t-k}$ may yield the result that due to the uncertainty in the probability density function reflected in the confidence set D, it has to be planned to keep the fill level always above 1.1 meters in order to be sure that the risk of the level dropping below 1 meter is 20 % or less.

Thus, with this drop-in replacement for the uncertain quantity x, all previous algorithms for monitoring, control and/or optimization may be used exactly as before without modification.

In a further particularly advantageous embodiment, the prediction model is combined with a determination of the residual based on the minimum requirement $\tilde{x}^*$ to form an updated prediction model. That is, the output of the new prediction model is the output of the old prediction model plus the residual determined based on $\tilde{x}^*$, e.g., $\tilde{x}^*$ estimated using a confidence level $(1 - \alpha')$ or determined in another way as a function of the confidence level $(1 - \alpha')$, $\tilde{x}^* = \tilde{x}^*(1 - \alpha')$. With this updated prediction model, a new iteration of the method is started. It may be easier to bring a given residual down in multiple steps than in one go. In particular, a first improvement may be obtained quickly, whereas a further refinement takes more time.

In a further particularly advantageous embodiment, at least one variable of the industrial process is optimized. Alternatively or in combination to this, at least one equation may be solved with respect to at least one variable of the industrial process and/or electrical network and/or any other problem. Further alternatively or in combination to this, a control output for at least one variable of the industrial process and/or electrical network may be obtained from a controller model, such as a model used in Model Predictive Control, MPC. In each case, the optimizing, the solving or the obtaining of the control output is performed under at least one chance constraint for the uncertain quantity x. wherein the minimum requirement $\tilde{x}^*$ for the threshold value $\tilde{x}$, estimated using a confidence level $(1 - \alpha')$, is used as an approximation for the residual. That is, as discussed before, the uncertain quantity x may be replaced with the output of the prediction model plus $\tilde{x}^*(1 - \alpha')$. For example, the inverse cumulative density function can be evaluated for the argument $(1 - \alpha')$ to get $\tilde{x}^*(1 - \alpha')$. The algorithm itself can then be used as before without modification.

In a further particularly advantageous embodiment, at least one actuator that causes a physical impact upon the industrial plant and/or electrical network is actuated according to a result of the optimizing, the solving or the obtaining of the control output. In this manner, the refinement of the chance constraint directly translates into an improvement of the operation of the industrial plant and/or electrical network.

In a further particularly advantageous embodiment, a confidence set $\mathcal{D}$ of probability density functions is chosen to comprise all probability distribution functions $\mathbb{P}$ whose divergence, according to a given divergence measure, to the estimated probability density function is less than a predetermined confidence set size d. For example, the confidence set $\mathcal{D}$ may be defined as

$$\mathcal{D} = \left\{ \mathbb{P} \in \mathcal{M}_+ : D_\phi(f || \hat{f}_X) \le d, \qquad f = \frac{d\mathbb{P}}{dx} \right\}.$$

Herein, $D_\phi$ is the $\phi$-divergence, and $\hat{f}_x$ is the estimated probability density function. For 1-dimensional random variables, the divergence $D_\phi(f||\hat{f}_x)$ is defined as:

$$D_\phi(f || \hat{f}_X) = \int_{\mathbb{R}} \phi\left(\frac{f(x)}{\hat{f}_X(x)}\right) \hat{f}_X(x) dx.$$

Herein, X is the random variable with a distribution function $\mathbb{P}_X$. To account for uncertainty in the probability distribution estimation, the classic chance constraint

$$\mathbb{P}_X(X \le \tilde{x}) \ge 1 - \alpha$$

that a randomly drawn value $X \sim \mathbb{P}_X$ will be less than or equal to $\tilde{x}$ with a probability of $1 - \alpha$ can be reformulated as:

$$\inf[\mathbb{P} \in \mathcal{D}]\, \mathbb{P}(X \le \tilde{x}) \ge 1 - \alpha.$$

In one example where the $\phi$-divergence is the $\chi$-divergence of order 2, defined by

$$\phi(x) := (x - 1)^2$$

for risk levels $\alpha \leq 1/2$, a closed-form derivation of the reduced risk level $\alpha'$ is possible:

$$\alpha' = \alpha - \frac{\sqrt{d^2 + 4d(\alpha - \alpha^2)} - (1 - 2a)d}{2d + 2}.$$

In a further particularly advantageous embodiment, the probability density function is estimated using at least one kernel density estimator. For example, Gaussian kernels, Epanechnikov kernels or Uniform kernels may be used. For the case of Gaussian kernels, for example, the kernel function bandwidth is obtained according to Scott's Rule, and the resulting estimated probability density function may be written as:

$$f_X^*(x) = \frac{1}{nh} \sum_{i=1}^{n} K\left(\frac{x - x_i^*}{h}\right).$$

Herein, $K$ is the kernel, $h$ is the bandwidth of the kernel, $n$ is the number of samples, and the $x_i^*$ are the used samples. The advantage of the Gaussian kernel is that it has smoother and more general distributions on small data sets than other kernels. The choice of the bandwidth has a significantly higher influence on the probability density function than the choice of the kernel function, and it should be chosen according to the number $n$ of available samples. For example, $h$ may be chosen as

$$h = n^{-\frac{1}{4}}$$

according to Scott's Rule. That is, in a particularly advantageous embodiment, at least one kernel density estimator is Gaussian with a bandwidth that minimizes an integrated mean squared error.

There may be any number of kernel functions. There may be one kernel for all samples, one kernel per sample, or anything in between these two extremes. For example, a parametrized kernel function may be fitted to the data.

In a further particularly advantageous embodiment, the confidence set size d is determined based at least in part on sample variance and/or t-statistic quantiles corresponding to the initial desired value $\alpha^*$ of the risk $\alpha$. This is independent from the sizes of histogram bins that are applied to the given data.

The general confidence interval for the estimated density $\hat{f}_X$ of the probability distribution of X can be written as:

$$\mathbb{E}\{\hat{f}_X(x)\} \in \left[\hat{f}_X(x) - u_{1-(\alpha/2)} \cdot s, \hat{f}_X(x) - u_{\alpha/2} \cdot s\right].$$

Since the variance of the estimation is unknown, the sample variance $s^2$ is used to construct the confidence interval. The values $u_{1-(\alpha/2)}$ and $u_{\alpha/2}$ are the 1 - $(\alpha/2)$ and $\alpha/2$ quantiles, respectively, of the t-statistic

$$t_X(x) = \frac{\hat{f}_X(x) - \mathbb{E}\{\hat{f}_X(x)\}}{s(x)}.$$

With this t-statistic, the quantiles are defined as $\mathbb{P}(t_X \leq u_{\alpha/2}) = \alpha/2$ and $\mathbb{P}(t_X \leq u_{1-(\alpha/2)}) = 1 - (\alpha/2)$, respectively.

In a further particularly advantageous embodiment, the estimation of the probability distribution function is performed on a selected bootstrapping subset of the residuals. The advantage of this is two-fold. First, the computation becomes more efficient if only a subset of the data that preserves the basic notion of the behavior of the data is used.

Second, if the confidence set size $d$ is determined based on $t$-statistic quantiles, it can be made sure that the $t$-statistic is unbiased. I.e., $u_{\alpha/2} \leq 0$ and $u_{1-(\alpha/2)} \geq 0$.

In a further particularly advantageous embodiment, the prediction model comprises a linear time-invariant auto-regressive model with exogenous inputs. These exogenous inputs comprise a synthetic input signal that models a nonlinear behavior of the uncertain quantity x within the context of the linear model. In this manner, the model itself can be kept linear, and a good prediction accuracy may be obtained even after a training on a small batch of data only.

In a further advantageous embodiment, a prediction model that has been trained with an objective function comprising a regularization term is chosen. This regularization term depends on a norm $\|\theta\|$ of the set of parameters $\theta$ that

characterize the behavior of the model. In this manner, overfitting of the model during the training of the prediction model for receding-horizon forecasting on a small training data set may be avoided. With such a regularization, for example, multi-step forecasts of an uncertain quantity x may be made at every control step of Stochastic Model Predictive Control (SMPC), instead of a single day-ahead forecast.

In a further particularly advantageous embodiment, the history $x^{\#}$ of measured past values $x_t, x_{t-1}, ..., x_{t-k}$ of the quantity x comprises at most half as many past values $x_t, x_{t-1}, ..., x_{t-k/2}$ as the prediction model has been trained with. This allows for a clear distinction between the long-term behavior that is captured by the prediction model on the one hand, and unexpected short-term behavior that does not fit into the model and has to be worked out from the history $x^{\#}$ on the other hand.

Because it is computer-implemented, the present method may be embodied in the form of a software. The invention therefore also relates to a computer program with machine-readable instructions that, when executed by one or more computers and/or compute instances, cause the one or more computers and/or compute instances to perform the method described above. Examples for compute instances include virtual machines, containers or serverless execution environments in a cloud. The invention also relates to a machine-readable data carrier and/or a download product with the computer program. A download product is a digital product with the computer program that may, e.g., be sold in an online shop for immediate fulfilment and download to one or more computers. The invention also relates to one or more compute instances with the computer program, and/or with the machine-readable data carrier and/or download product.

The present disclosure proposes a novel method to formulate stochastic optimization and/or stochastic model predictive control problems based on a data-driven non-parametric self-tuning chance constrained approach, whose applications include, but are not limited to, energy management problems, assets planning problems, scheduling problems, control problems. The proposed method does not require any prior assumption on the probability distribution of uncertain quantities, but it uses an improved approach to estimate probability density functions of the residuals of the uncertain variables forecast based on past data, using an automatic and self-tuning method. Moreover, the proposed method allows to formulate the stochastic part of optimization and control problems as algebraic (linear) constraints, thus having no negative impact on the computational effort required to solve such stochastic problems.

Optimization-based solutions to a wide range of problems, like energy management, production scheduling, plant control, etc., usually operate in environments where some quantities (e.g. process variables, weather conditions, parameters, etc.) are uncertain and/or subject to unknown disturbances. A commonly adopted strategy is to use prediction models to forecast the future behavior of uncertain quantities, and to treat such forecasts as the truth while planning the future behavior of the considered system. This approach, based on the formulation of optimization problems on the nominal "trajectory" of uncertain quantities obtained from prediction models, suffers from a lack of robustness when, as is it often the case, the real behavior of uncertain quantities differs from the forecasted one. This causes a decrease in performance and compliance problems, since the solution of the "nominal" optimization problem could then be sub-optimal or infeasible once implemented.

Robust and stochastic optimization approaches have been proposed over the years to address such issues, relying on different philosophies (e.g. deterministic vs. stochastic) and on different formulations. Such solutions however still suffer from several problems. Deterministic (or worst-case) approaches provide results that are usually too conservative. Stochastic approaches are also affected by difficulties: they either require the prior knowledge of the exact underlying probability distribution of the uncertainties, which is rarely available, or they result in intractable formulations that are usually too computationally intensive to be implemented in real industrial applications. Available optimization-based industrial solutions are not yet able to include the stochastic contribution of uncertain quantities without requiring unrealistic prior assumptions, and resulting in a tractable and computationally sound formulation.

The proposed solution for the described problems relies on a data-base non-parametric method used to estimate the probability density function (PDF) of uncertain quantities from available data, on a bootstrapping method to automatically improve the sizing of the confidence set of the estimated PDF, and on a linear (algebraic) formulation of chance constraints that can be easily added to any class of optimization problem without increasing its complexity and its computational burden. Moreover, the proposed solution is meant to be implemented in conjunction with any type of prediction/forecasting model, since it is applied on the forecasting residual (i.e. the forecasting error) instead of being directly applied on the uncertain variables. This allows additional flexibility and improves the adaptability of the forecasts, since they can be formulated to be dependent on input signals like weather data, process dependencies, or synthetic inputs that improves the overall performance (e.g. work-day/weekend indicators). A tunable confidence level is provided to the operator/user as a decision variable to select a desired robustness (and conservativeness) level of the optimization results in face of uncertainties.

This solution allows to formulate stochastic optimization problems to solve various tasks without requiring any kind of prior assumption, without having a negative impact on the required overall computational effort, and it allows to create an automatic pipeline where the desired PDFs are estimated from data with little to none engineering effort and manual intervention, and the confidence level is self-tuned/self-refined based on the information content of the available data.

As a prerequisite, a nominal optimization problem is formulated to solve a specific task, where one or more variables are uncertain or affected by unknown disturbances, a prediction model is available to forecast the future behavior of uncertain variables (it could have any kind of structure or formulation), and a dataset with historical values of the uncertain variables and the corresponding forecasts is available. The solution is then based of the following steps: a) a desired prediction horizon length and a desired confidence level are set by the user/operator/system; b) the residual (i.e. the error between forecast and real values) is computed for all uncertain quantities over the available historical dataset; c) kernel density estimation with, for example, Gaussian kernels is used to estimate the probability density functions of the residuals of all uncertain variables from the available dataset; d) Scott's Rule is used to compute the bandwidth of the adopted kernel functions; e) the confidence interval for the estimated probability density function is constructed using sample variance and t-statistic quantiles corresponding to the confidence level set in a); f) a data bootstrapping technique is used to refine the obtained density function resulting in an unbiased formulation of the confidence interval; g) the confidence interval size is then computed and it is used to calculate the reduce risk level from the confidence level defined in a), thus adapting the risk level to the information content of available data; h) the cumulative distribution function of the considered residuals is computed from the estimated density function obtained from the kernel function refined with the bootstrapping technique, and the corresponding quantile function is evaluated at the reduced risk level of g) to obtain algebraic (linear) chance constraints that could then be included into the desired optimization problem formulation.

Advantages of the solution include:

- It provides an automated pipeline to obtain algebraic chance constraints for the formulation of stochastic optimization problems from data, without requiring prior assumptions, including self-tuning functionalities to adapt the risk level to the information content of available data.
- It is used in conjunction with prediction models of any type, and it is formulated over the forecast residuals instead of being formulated directly on uncertain variables, thus allowing the use of additional inputs to improve the forecast accuracy.
- It uses a data bootstrapping technique to refine the formulation of the kernel density estimators, while prior art uses point-wise error bins, thus improving the sizing of the resulting confidence sets.
- It is a flexible and "problem agnostic" approach, since it works with all kinds of prediction/forecasting models and it is easily adaptable to all kind of problems with uncertain quantities, like microgrids optimal energy scheduling, building/industry energy management, scheduling of production or inventory, etc.
- No prior assumptions on the probability functions are required.
- Performance improvement resulting from better forecasting performance, since the application of the described stochastic approach on the prediction residuals instead of its direct applications on the uncertain variables allows for better forecasting accuracy since it permits the use of additional input signals.
- The use of data bootstrapping improves the sizing of the density functions confidence sets, which results in improved reduced risk levels.
- The self-tuning of the reduced risk levels decreases the conservativeness of the results since the confidence level is automatically adapted to the information content of the available dataset.
- The obtained algebraic chance constraints have no significant impact on the computational effort needed to solve the resulting optimization problems, and they have no influence on the optimization problem class (e.g. linear, quadratic, nonlinear, etc.). This allows for a computationally lean formulation of the stochastic optimization problem, and its use in real-world industrial applications.

The solution involves:

- A computing unit, with access to relevant historical data (e.g. past values of uncertain variables), with pre-trained prediction/forecasting models (model structure and learning/training method are out of scope of this Invention) that are used to forecast the future behavior of uncertain variables.
- (Possibly) an interface for users/operators/systems, where the desired robustness level is specified via the confidence level parameter.
- (Possibly) an interface to users/operators/systems/plants, where the results of the optimization could be visualized and/or implemented on a system or plant.
- An intelligent and self-tuning algorithm that estimates the probability density functions of the forecast residuals of all uncertain variables, self-tunes the kernel functions bandwidth, automatically adapts the risk level to the information content of the dataset, refines the density functions estimation with data bootstrapping, evaluates the corresponding quantile functions to the reduced risk level and outputs algebraic chance constraints that could be included into any kind of optimization problem.

The method and the overall workflow/pipeline allow one to automatically obtain stochastic chance constraints for optimization problem formulation from data, without prior assumption on probability distributions.

The data-driven non-parametric approach is based on kernel density estimation, with data bootstrapping refinement, automatic kernel bandwidth computation, self-tuning of the (reduced) risk level, estimation of probability density function and subsequent evaluation of the corresponding quantile function to formulate algebraic chance constraints.

The Idea regards a data-driven non-parametric self-tuning chance constrained approach to formulate tractable and computationally sound stochastic optimization problems that can be used to address various tasks, as energy management, production scheduling, etc.

Let us consider the problem of optimal energy management for a small grid-connected microgrid composed of a photovoltaic electric power generator, a non-controllable uncertain electric load, and a battery storage system. The goal is to manage the battery storage to maximize the use of renewable energy and minimize the cost of the energy bought from the grid while satisfying the electric load demand. Then, one possible constraint for the considered optimization problem is the energy balance constraint, stating that the sum of the energy bought from the grid, discharged from the battery, and generated by the photovoltaic system, minus the electric load and the energy charged into the battery should be equal to zero at any time instant k:

$$P_{grid}(k) + P_{battery_{discharge}}(k) + P_{pv}(k) - P_{load}(k) - P_{battery_{charge}}(k) = 0$$

Since both the photovoltaic power generation and the load demand are unknown and uncertain, prediction models are used to forecast their values as $\hat{P}_{pv}(k)$ and $\hat{P}_{load}(k)$ respectively. The resulting nominal (non-stochastic) constraint is:

$$P_{grid}(k) + P_{battery_{discharge}}(k) + \hat{P}_{pv}(k) - \hat{P}_{load}(k) - P_{battery_{charge}}(k) = 0.$$

The nominal constraint does not account for the stochasticity of the uncertain variables, thus it is affected by the problem of sub-optimality and potential infeasibility. The corresponding algebraic chance constraint obtained using the data-driven non-parametric approach proposed here is:

$$P_{grid}(k) + P_{battery_{discharge}}(k) + \hat{P}_{pv}(k) + \hat{F}^{-1}_{\hat{P}_{pv}(k)}(1 - \alpha') - \hat{P}_{load}(k) - \hat{F}^{-1}_{\hat{P}_{load}(k)}(1 - \alpha')$$
$$- P_{battery_{charge}}(k) = 0.$$

DESCRIPTION OF THE FIGURES

In the following, the invention is illustrated using Figures without any intention to limit the scope of the invention. The Figures show:

Figure 1: Exemplary embodiment of the method 100 for refining the risk $\alpha$ that an uncertain quantity $x$ in an industrial process and/or electrical network will exceed a given threshold value $\bar{x}$;

Figure 2: Comparison between the prediction of a load in an electrical network and actual measured values (Figure 2a); comparison between the prediction of photovoltaic generation and actual measured values (Figure 2b);

Figure 3: Example of an estimated probability density function with confidence intervals corresponding to a confidence $p$ = 0.9;

Figure 4: Refinement of the prediction of the load using an estimate of the residual 3 based on the minimum requirement $\bar{x}^*$ for the threshold value $\bar{x}$;

Figure 5: Dependency of a battery state of charge in the electrical network on the risk $\alpha$ of the battery running out; comparison with nominal MPC.

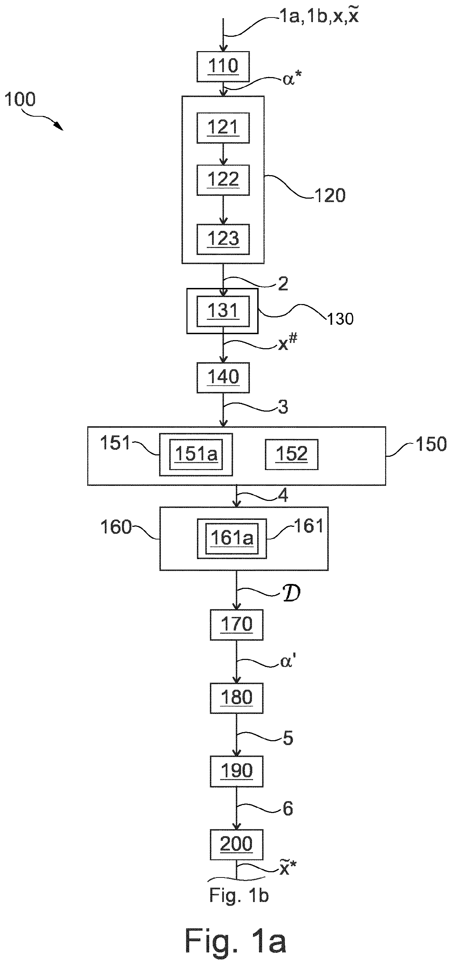

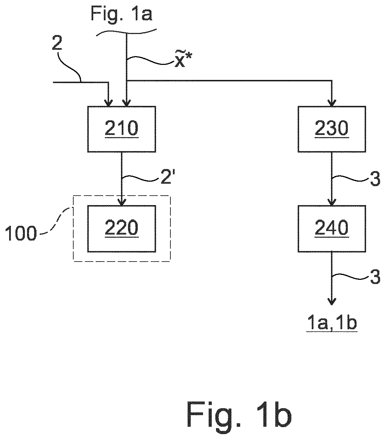

Figure 1 is a schematic flow chart of an exemplary embodiment of the method 100 for refining the risk $\alpha$ that an uncertain quantity $x$ in an industrial process and/or electrical network will exceed a given threshold value $\bar{x}$. The method 100 starts from a situation where, in an industrial process 1a and/or electrical network 1b, the risk $\alpha$ that an uncertain

quantity $x$ will exceed a given threshold value $\bar{x}$ needs to be assessed.

In step 110, an initial desired value $\alpha^*$ of the risk $\alpha$ is provided.

In step 120, a prediction model 2 is provided. This prediction model 2 is configured to predict, from values $x_t, x_{t-1}, ..., x_{t-k}$ of the quantity $x$, future values $x_{t+1}, ..., x_{t+l}$ of this quantity $x$.

According to block 121, this prediction model 2 may comprise a linear time-invariant auto-regressive model with exogenous inputs. The exogeneous inputs may then, according to block 122, comprise a synthetic input signal that models a nonlinear behavior of the uncertain quantity $x$ within the context of the linear model.

According to block 123, the prediction model 2 may be chosen to have been trained with an objective function that comprises a regularization term that depends on a norm $\|\theta\|$ of the set of parameters $\theta$ that characterize the behavior of the model 2.

In step 130, a history $x^\#$ of measured past values $x_t, x_{t-1}, ..., x_{t-k}$ of the quantity $x$ is provided.

According to block 131, this history $x^\#$ may comprise at most half as many past values $x_t, x_{t-1}, ..., x_{t-k/2}$ as the prediction model 2 has been trained with.

In step 140, for this history $x^\#$, differences between values $\hat{x}_t, \hat{x}_{t-1}, ..., \hat{x}_{t-k}$ predicted by the prediction model and the measured past values $x_t, x_{t-1}, ..., x_{t-k}$ are determined as residuals 3.

In step 150, an estimated probability density function 4 of these residuals 3 is determined.

According to block 151, the probability density function 4 may be estimated using at least one kernel density estimator.

According to block 151a, this at least one kernel density estimator may be chosen to be Gaussian with a bandwidth that minimizes an integrated mean squared error.

According to block 152, the estimation of the probability distribution function 4 may be performed on a selected bootstrapping subset of the residuals 3.

In step 160, based at least in part on the history $x^\#$, and/or on the residuals 3, a confidence set $\mathcal{D}$ to which the estimated probability density function 4 belongs is determined. This confidence set $\mathcal{D}$ comprises probability density functions that would be equally plausible given the history $x^\#$ and/or the residuals 3.

According to block 161, this confidence set $\mathcal{D}$ of probability density function 4 may be chosen to comprise all probability distribution functions $\mathbb{P}$ whose divergence, according to a given divergence measure, to the estimated probability density function is less than a predetermined confidence set size $d$.

According to block 161a, the confidence set size $d$ is determined (161a) based at least in part on sample variance and/or $t$-statistic quantiles corresponding to the initial desired value $\alpha^*$ of the risk $\alpha$.

In step 170, based at least in part on the dimension of the confidence set $\mathcal{D}$, a new risk $\alpha'$ is determined. The meaning of this new risk $\alpha'$ is that, if the risk $\alpha$ that $x$ exceeds $\bar{x}$ is less than $\alpha'$, it is guaranteed that this risk $\alpha$ will not exceed the initial desired value $\alpha^*$ even if the residuals should behave according to any one of the probability density functions in the confidence set $\mathcal{D}$ instead of the estimated probability density function 4.

In the example shown in Figure 1, in step 180, the cumulative density function 5 of the estimated probability density function 4 is computed, and in step 190, an inverse 6 of the cumulative density function 5 is computed. Then, in step 200, from the inverse 6 of the cumulative density function 5 and the new risk $\alpha'$, a minimum requirement $\bar{x}^*$ that the threshold value $\bar{x}$ must fulfil for the guarantee regarding the risk $\alpha$ to be valid is evaluated.

In step 210, the prediction model 2 may be combined with a determination of the residual based on the minimum requirement $\bar{x}^*$ to form an updated prediction model 2'. In step 220, a new iteration of the method 100 may then be started with this updated prediction model 2'.

In step 230,

- an optimizing of at least one variable of the industrial process 1a and/or electrical network 1b; and/or
- a solving of at least one equation with respect to at least one variable of the industrial process 1a and/or electrical network 1b and/or any other problem; and/or
- an obtaining of a control output for at least one variable of the industrial process 1a and/or electrical network 1b from a controller model

is performed under at least one chance constraint for the uncertain quantity $x$. The minimum requirement $\bar{x}^*$ for the threshold value $\bar{x}$, determined using a confidence level $(1 - \alpha')$, is used as an approximation for the residual 3.

In step 240, at least one actuator that causes a physical impact upon the industrial plant 1a and/or electrical network 1b is actuated according to a result of the optimizing, the solving or the obtaining of the control output.

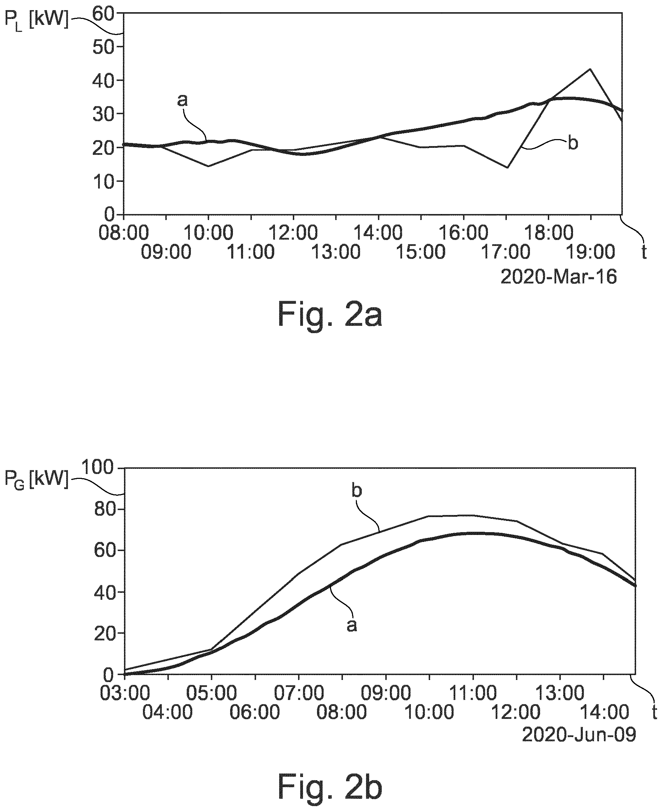

Figure 2a shows the electrical load $P_L$ in an electrical network 1b that is supplied by photovoltaic generation, comprises a battery storage, and is also connected to an external grid. The electrical load $P_L$ is plotted over the time $t$. Curve a shows a prediction of the electrical load $P_L$; curve b shows actual measured values. In the example shown in Figure 2a, the general trend of the prediction is in agreement with the measured values, but the prediction is missing some - literally - unforeseen details.

Figure 2b shows the photovoltaic generation $P_G$ in the same electrical network 1b. Akin to Figure 2a, the photovoltaic generation $P_G$ is plotted over the time $t$. Curve a shows the prediction, and curve b shows the actual measured values. In the example shown in Figure 2b, the prediction is in agreement with the generic trend of the measured values. But the prediction underestimates the rise of the photovoltaic generation $P_G$ to its maximum.

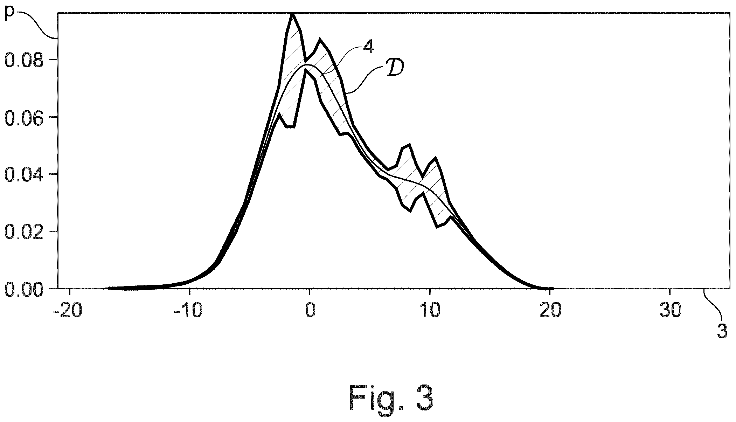

Figure 3 shows an example of an estimated probability density function 4 for a residual with confidence intervals corresponding to a confidence $p = 0.9$. The probability $p$ is plotted over the value of the residual 3. The confidence intervals define the confidence set $\mathcal{D}$ of plausible probability density functions. In the one-dimensional case shown in Figure 3, this confidence set $\mathcal{D}$ manifests itself as an area through which the probability density function can pass.

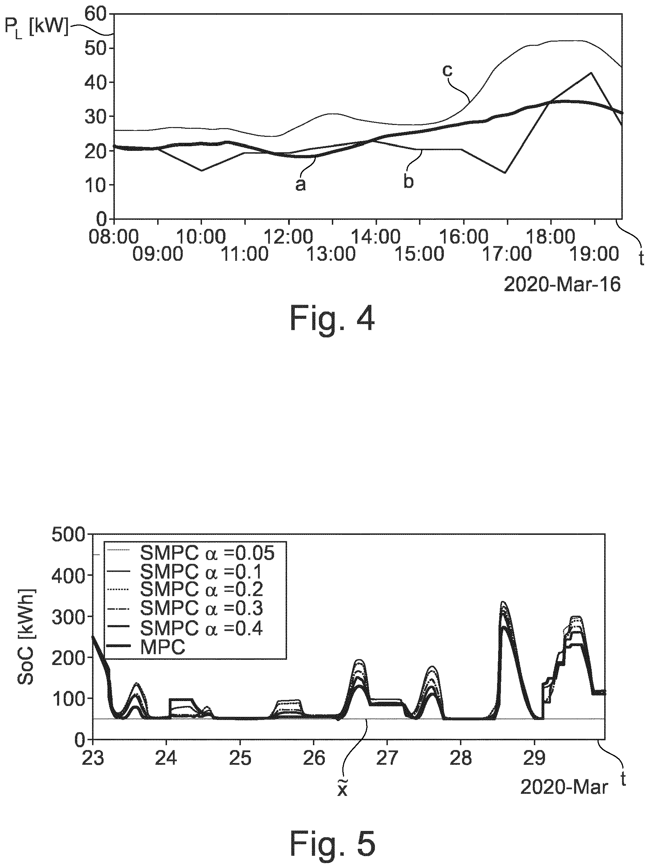

Figure 4 shows how the prediction of the electrical load $P_L$ in the electrical network 1b shown in Figure 2a may be refined using an estimate of the residual 3 that is based on the minimum requirement $\tilde{x}^*$ for the threshold value $\tilde{x}$. Figure 4 thus corresponds to Figure 2a, with the refined prediction of the electrical load $P_L$ added as curve c. In particular, the refined prediction is now always greater than the real measurement of the electrical load $P_L$. Thus, the prediction is guaranteed not to underestimate the electrical load $P_L$, decreasing the risk of constraint violation.

Figure 5 illustrates how the value of the risk level $\alpha$ can have an influence on how the process needs to be run. The state of charge (SoC) of a battery in the electrical network 1b investigated in Figure 2 is plotted over the time $t$. The chance constraint is that the state of charge should not drop below the threshold value $\tilde{x}$. Compared with the state of charge that would be the result of conventional model predictive control, MPC, the lower the acceptable risk level $\alpha$, the higher the safety margin in energy that is stored in the charging phases of the battery.

**List of reference signs:**

1a     industrial plant
1b     electrical network
2     prediction model for uncertain quantity $x$
2'     updated prediction model 2
3     residuals between prediction and past values of uncertain quantity $x$
4     probability density function of residuals 3
5     cumulative density function of probability density function 4
6     inverse of cumulative density function
100     method for refining risk $\alpha$
110     providing initial desired value $\alpha^*$ of the risk $\alpha$
120     providing prediction model 2
121     choosing linear model with exogenous inputs
122     using synthetic input signal as exogenous input
123     choosing prediction model 2 trained with regularization
130     providing history $x^{\#}$ of uncertain quantity $x$
131     choosing setting with short history $x^{\#}$
140     determining residuals 3 from history $x^{\#}$
150     estimating probability density function 4
151     estimating probability density function 4 with kernel density estimator
151a     choosing Gauss kernel density estimator
152     estimating probability density function based on bootstrapping subset
160     determining confidence set $\mathcal{D}$
161     choosing confidence set $\mathcal{D}$ according to divergence
161a     choosing particular methods for determining confidence set $\mathcal{D}$
170     determining new risk $\alpha'$
180     computing cumulative density function 5
190     computing inverse of cumulative density function 5
200     evaluating minimum requirement $\tilde{x}^*$ for threshold value $\tilde{x}$
210     combining prediction model 2 with estimate of residual 3 to updated model 2'
220     starting new iteration of method 100 with updated model 2'
230     using estimate of residual 3 in chance constraint
240     actuating at least one actuator
$\alpha$     risk that uncertain quantity $x$ exceeds threshold value $\tilde{x}$

$\alpha$    *initial desired value of risk $\alpha$

$\alpha'$    new risk in view of available data

$\mathcal{D}$    confidence set of probability density functions

(S)MPC    (stochastic) model predictive control

$\rho$    probability

$P_G$    photovoltaic electricity generation in electrical network 1b

$P_L$    load in electrical network 1b

$x$    uncertain quantity

$\tilde{x}$    threshold value for uncertain quantity x

$x^{\#}$    history of past values of uncertain quantity $x$

$\tilde{x}^*$    minimum requirement for threshold value $\tilde{x}$

**Claims**

1. A computer-implemented method (100) for refining the risk $\alpha$ that an uncertain quantity $x$ in an industrial process (1a) and/or electrical network (1b) will exceed a given threshold value $\tilde{x}$, the method comprising the steps of:

   • providing (110) an initial desired value $\alpha^*$ of the risk $\alpha$;
   • providing (120) a prediction model (2) that is configured to predict, from values $x_t, x_{t-1}, ..., x_{t-k}$ of the quantity $x$, future values $x_{t+1}, ..., x_{t+l}$ of this quantity $x$;
   • providing (130) a history $x^{\#}$ of measured past values $x_t, x_{t-1}, ..., x_{t-k}$ of the quantity $x$;
   • determining (140), for this history $x^{\#}$, differences between values $\hat{x}_t, \hat{x}_{t-1}, ..., \hat{x}_{t-k}$ predicted by the prediction model and the measured past values $x_t, x_{t-1}, ..., x_{t-k}$ as residuals (3);
   • determining (150) an estimated probability density function (4) of these residuals (3);
   • determining (160), based at least in part on the history $x^{\#}$, and/or on the residuals (3), a confidence set $\mathcal{D}$ to which the estimated probability density function (4) belongs, said confidence set $\mathcal{D}$ comprising probability density functions that would be equally plausible given the history $x^{\#}$ and/or the residuals (3); and
   • determining (170), based at least in part on the dimension of the confidence set $\mathcal{D}$, a new risk $\alpha'$ such that, if the risk $\alpha$ that $x$ exceeds $\tilde{x}$ is less than $\alpha'$, it is guaranteed that this risk $\alpha$ will not exceed the initial desired value $\alpha^*$ even if the residuals should behave according to any one of the probability density functions in the confidence set $\mathcal{D}$ instead of the estimated probability density function (4).

2. The method (100) of claim 1, further comprising:

   • computing (180) the cumulative density function (5) of the estimated probability density function (4);
   • computing (190) an inverse (6) of the cumulative density function (5); and
   • evaluating (200), from the inverse (6) of the cumulative density function (5) and the new risk $\alpha'$, a minimum requirement $\tilde{x}^*$ that the threshold value $\tilde{x}$ must fulfil for the guarantee regarding the risk $\alpha$ to be valid.

3. The method (100) of claim 2, further comprising:

   • combining (210) the prediction model (2) with a determination of the residual based on the minimum requirement $\tilde{x}^*$ to form an updated prediction model (2'); and
   • starting (220) a new iteration of the method (100) with this updated prediction model (2').

4. The method (100) of any one of claims 2 to 3, further comprising one or more of:

   • optimizing at least one variable of the industrial process (1a) and/or electrical network (1b);
   • solving at least one equation with respect to at least one variable of the industrial process (1a) and/or electrical network (1b) and/or any other problem; and
   • obtaining a control output for at least one variable of the industrial process (1a) and/or electrical network (1b) from a controller model,

   wherein the optimizing, the solving or the obtaining of the control output is performed under at least one chance constraint for the uncertain quantity $x$ and wherein the minimum requirement $\tilde{x}^*$ for the threshold value $\tilde{x}$, determined using a confidence level (1 - $\alpha'$), is used (230) as an approximation for the residual (3).

**5.** The method (100) of claim 4, further comprising: actuating (240) at least one actuator that causes a physical impact upon the industrial plant (1a) and/or electrical network (1b) according to a result of the optimizing, the solving or the obtaining of the control output.

**6.** The method (100) of any one of claims 1 to 5, wherein a confidence set $\mathcal{D}$ of probability density function (4) is chosen (161) to comprise all probability distribution functions $\mathbb{P}$ whose divergence, according to a given divergence measure, to the estimated probability density function is less than a predetermined confidence set size $d$.

**7.** The method (100) of claim 6, wherein the confidence set size d is determined (161a) based at least in part on sample variance and/or t-statistic quantiles corresponding to the initial desired value $\alpha^*$ of the risk $\alpha$.

**8.** The method (100) of any one of claims 1 to 7, wherein the probability density function (4) is estimated (151) using at least one kernel density estimator.

**9.** The method (100) of claim 8, wherein at least one kernel density estimator is chosen (151a) to be Gaussian with a bandwidth that minimizes an integrated mean squared error.

**10.** The method (100) of any one of claims 1 to 9, wherein the estimation of the probability distribution function (4) is performed (152) on a selected bootstrapping subset of the residuals (3).

**11.** The method (100) of any one of claims 1 to 10, wherein

- the prediction model (2) comprises (121) a linear time-invariant auto-regressive model with exogenous inputs; and
- the exogenous inputs comprise (122) a synthetic input signal that models a nonlinear behavior of the uncertain quantity x within the context of the linear model.

**12.** The method (100) of claim 11, wherein the prediction model (2) has been trained (123) with an objective function that comprises a regularization term that depends on a norm $\|\theta\|$ of the set of parameters $\theta$ that characterize the behavior of the model (2).

**13.** The method (100) of any one of claims 1 to 12, wherein the history $x^{\#}$ of measured past values $x_t, x_{t-1}, ..., x_{t-k}$ of the quantity $x$ comprises (131) at most half as many past values $x_t, x_{t-1}, ..., x_{t-k/2}$ as the prediction model (2) has been trained with.

**14.** A computer program, comprising machine-readable instructions that, when executed on one or more computers and/or compute instances, cause the one or more computers and/or compute instances to perform the method (100) of any one of claims 1 to 13.

**15.** A non-transitory machine-readable data carrier, and/or a download product, with the computer program of claim 14.

**16.** One or more computers and/or compute instances with the computer program of claim 14, and/or with the non-transitory machine-readable data carrier, and/or a download product of claim 15.

Fig. 1a

Fig. 1b

Fig. 2a

Fig. 2b

Fig. 3

Fig. 4

Fig. 5

Europäisches
Patentamt

European
Patent Office

Office européen
des brevets

# EUROPEAN SEARCH REPORT

**Application Number**

EP 23 18 9503

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CIFTCI OKAN ET AL: "Data-Driven Nonparametric Chance-Constrained Optimization for Microgrid Energy Management", IEEE TRANSACTIONS ON INDUSTRIAL INFORMATICS, IEEE SERVICE CENTER, NEW YORK, NY, US, vol. 16, no. 4, 30 July 2019 (2019-07-30), pages 2447-2457, XP011768117, ISSN: 1551-3203, DOI: 10.1109/TII.2019.2932078 [retrieved on 2020-01-21] * sections V.A, IV.A, IV.B; pages 2,6 * | 1-16 | INV. G06N20/10 H02J4/00 |
| X | KAFFASH MAHTAB ET AL: "Interval Optimization to Schedule a Multi-Energy System with Data-Driven PV Uncertainty Representation", ENERGIES, [Online] vol. 14, no. 10, 11 May 2021 (2021-05-11), page 2739, XP093118629, CH ISSN: 1996-1073, DOI: 10.3390/en14102739 Retrieved from the Internet: URL:https://www.mdpi.com/1996-1073/14/10/2739> [retrieved on 2024-01-11] * sections 2.1.6, 2.2 * | 1-16 | |

**TECHNICAL FIELDS SEARCHED (IPC)**

G06N
H02J

The present search report has been drawn up for all claims

| Place of search | Date of completion of the search | Examiner |
|---|---|---|
| Munich | 11 January 2024 | Thielemann, Benedikt |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)